(19) **Europäisches Patentamt** / **European Patent Office** / **Office européen des brevets**

(11) **EP 2 347 192 B1**

(12) **EUROPEAN PATENT SPECIFICATION**

(45) Date of publication and mention
of the grant of the patent:
**09.01.2013 Bulletin 2013/02**

(21) Application number: **09756182.3**

(22) Date of filing: **03.11.2009**

(51) Int Cl.:
***F24J 2/07*** *(2006.01)*

(86) International application number:
**PCT/IB2009/054866**

(87) International publication number:
**WO 2010/055439 (20.05.2010 Gazette 2010/20)**

(54) **A SOLAR RECEIVER FOR USE IN A SOLAR ENERGY CONCENTRATOR**

SOLAREMPFÄNGER ZUR VERWENDUNG IN EINEM SONNENENERGIEKONZENTRATOR

RÉCEPTEUR SOLAIRE S'UTILISANT DANS UN CONCENTRATEUR D'ÉNERGIE SOLAIRE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **13.11.2008 EP 08168987**

(43) Date of publication of application:
**27.07.2011 Bulletin 2011/30**

(73) Proprietor: **Koninklijke Philips Electronics N.V.
5621 BA Eindhoven (NL)**

(72) Inventor: **VAN DER GRAAF, Tim
NL-5656 AE Eindhoven (NL)**

(74) Representative: **Volmer, Georg
Philips Intellectual Property & Standards GmbH
Postfach 50 04 42
52088 Aachen (DE)**

(56) References cited:
**EP-A2- 1 610 073**     **DE-A1-102007 022 881**
**DE-B3-102004 038 602**     **JP-A- 8 295 521**
**US-A1- 2007 293 388**

**Description**

FIELD OF THE INVENTION

The present invention relates to high temperature solar energy concentrators, which can be used to heat materials, optionally to temperatures in excess of 800 °C. The present invention relates in particular to a window for use in a solar energy concentrator and a solar receiver for use in a solar energy concentrator.

BACKGROUND TO THE INVENTION

Solar energy is used on a moderate scale for the household generation of warm water or to produce steam in large parabolic trough installations. In these applications, sunlight falls directly on a dark substrate or is focused via a parabolic trough mirror on an absorbing tube to heat water or oil contained within the tube. Parabolic trough collectors can heat steam, but generally up to temperatures of less than about 500 °C.

High temperature solar energy concentrators for heating materials to temperatures above about 800 °C are known. An example of such a solar energy concentrator is disclosed in a paper by Röger et al in Journal of Solar Energy Engineering, 2006, 128, 265-274 and in EP 1610073. In these documents, a solar energy absorber is disclosed having a parabolic mirror, which concentrates incident sunlight into a chamber via a fused silica window. A gas within the chamber is heated by the concentrated light. A fused silica window is used in such solar energy concentrators, since it is able to withstand high solar flux, high temperatures and high pressures.

In the Journal of Solar Energy Engineering, 2006, 128, 265-274, Röger et al attempted to overcome a problem associated with high temperature solar energy concentrators. The fused silica window used in prior art solar energy concentrators has been found to have a safe upper operating temperature of about 800 °C. This limits the temperature to which gases and other materials within the device can be heated. Röger et al sought to overcome this problem by producing a solar energy concentrator having a multiple air-jet window cooling system. Using this system, Röger et al found they were able to increase the temperature of a gas within the solar energy concentrator to over 1000 °C, while maintaining a window temperature of less than 800 °C.

SUMMARY OF THE INVENTION

While the paper authored by Röger et al allowed the use of a solar energy concentrator to heat a gas to above 1000 °C, it would be desirable to produce an alternative solar energy concentrator or an improved solar energy concentrator, for example one that is more efficient. It would be advantageous to produce a solar energy concentrator that can heat materials to high temperatures, e.g. temperatures of 800 °C or more, but avoids the use of a window cooling system.

The present inventors have found that there are surprising advantages in using windows comprising vitreous silica with a high OH content. In particular, the present inventors have found that by raising the OH content of a vitreous silica-containing window, the infra-red emissivity is increased, while there is little or no change in the solar light absorption of the window. This means that, for a given light intensity on the window, the temperature of a high OH-content vitreous silica window is lower than that of a low-OH content vitreous silica window.

According to a first aspect of the invention, there is provided a solar receiver for use in a solar energy concentrator, the receiver comprising a housing and a window disposed in or on a wall of the housing, wherein the window comprises vitreous silica having an OH content of 30 ppm or more by weight.

In an embodiment, the window preferably comprises vitreous silica having an OH content of 40 ppm or more, preferably 50 ppm or more, preferably 100 ppm or more, preferably 300 ppm or more, preferably 600 ppm or more, preferably 800 ppm or more by weight.

In an embodiment, the window has at least one concave or convex face.

In an embodiment, the window comprises vitreous silica that has been formed in a quartz melting furnace, with optional subsequent processing to shape the vitreous silica into a desired shape. In this embodiment, the vitreous silica may be formed from melting crystalline quartz, and then solidifying it using known techniques, to form the vitreous silica.

In an embodiment, the window comprises vitreous silica that has been formed in a sol-gel process, with subsequent densification, the vitreous silica having an OH content of 30 ppm or more. Such sol-gel processes for the production of vitreous silica are known. In this embodiment, the vitreous silica is preferably formed in the densification process into the desired shape of the window. This avoids the need for substantial further processing of the vitreous silica, e.g. by mechanical means, such as grinding. The surface of the vitreous silica formed in this embodiment may be optionally polished and/or treated as required, to increase its transparency.

In an embodiment, the housing defines a cavity and light can pass through the window into the cavity.

According to a second aspect of the invention, there is provided a solar energy concentrator comprising (i) the solar receiver of the first aspect and (ii) a light concentrating device disposed externally of the housing, wherein the light concentrating device is positioned such that it concentrates light onto the window.

According to a third aspect of the invention, there is provided a method of heating a substance, the method comprising:

(i) providing a solar energy concentrator of the second aspect, wherein the substance is disposed on a side of the window in the interior of the housing; and
(ii) allowing light to be incident on the light concentrating device, such that the light is concentrated and passes through the window to the substance to heat the substance.

In an embodiment of the third aspect, the substance comprises a fluid material, the housing of the solar receiver defines a cavity and light can pass through the window into the cavity, and the substance is located within the cavity.

In an embodiment, the vitreous silica window has at least one face that is concave or convex, and has preferably been formed in a sol-gel process.

According to a fourth aspect of the invention, there is provided use of a window comprising vitreous silica having an OH content of 30 ppm or more by weight in a solar energy concentrator.

In an embodiment of the fourth aspect, a substance in the solar energy concentrator is heated to a temperature of 800 °C or more, optionally 800 °C or more, optionally 1200 °C or more.

According to a fifth aspect of the invention, there is provided a window for use in a solar receiver, the window comprising vitreous silica having an OH content of 30 ppm or more by weight and having one or more surfaces that are either concave or convex.

In an embodiment of the fifth aspect, the vitreous silica has been formed in a sol-gel process, with subsequent densification; the sol-gel process and the densification may be as described herein.

In an embodiment of the fifth aspect, the window comprises vitreous silica that has been formed in a quartz melting furnace, with optional subsequent processing to shape the vitreous silica into a desired shape.

BRIEF DESCRIPTION OF THE DRAWINGS

The invention will now be described, by way of example only, with reference to the following drawings, in which:

Fig. 1 shows a cross sectional view of part of an embodiment of a solar energy concentrator;
Fig. 2 shows measured transmission spectra of Type V vitreous silica materials normalized to 1 mm thickness having a OH content of 0.2 (solid line) and 141 (grey) ppm by weight OH;
Fig. 3 shows measured transmission spectra of Type V vitreous silica with OH content of 0.2 and 141 ppm and calculated transmission spectra for Type V vitreous silica with OH content of 100, 200, 400 and 800 ppm OH. All spectra normalized to 1 mm material thickness; and
Fig. 4 shows the absorptivity $\alpha$ of the OH-absorption over the range 2500-3000 nm of a Type V vitreous silica sample having an OH content of 141 ppm, which was used to calculate the emission spectra shown in Fig. 3.

DETAILED DESCRIPTION OF THE INVENTION

The present invention provides the aspects mentions above in the Summary of the Invention.

The window comprises vitreous silica having an OH content of 30 ppm or more by weight. The window may comprise, consist essentially of or consist of vitreous silica having an OH content of 30 ppm or more by weight. If the window consists essentially of vitreous silica having an OH content of 30 ppm or more by weight, preferably less than 1% of other materials are present in the vitreous silica, preferably less than 0.5% of other materials are present in the vitreous silica. In an embodiment, the window preferably comprises vitreous silica having an OH content of 40 ppm or more, preferably 50 ppm or more, preferably 100 ppm or more, preferably 300 ppm or more, preferably 600 ppm or more, preferably 800 ppm or more by weight. The window typically has an absorption peak within the region of 2680-2800 nm.

The method of measuring of the OH-content in vitreous silica is known to the skilled person. The OH-content in vitreous silica is measured by spectroscopic means, by measuring the intensity of absorption at 2720 nm. This established technique has been used for a number of years. See, for example, an article by Shelby, Journal of Applied Physics 51(5), May 1980. The correlation between the absorption at 2720 nm and the concentration of OH in ppm by weight in vitreous silica is illustrated in the Examples below.

Vitreous silica is known to the skilled person. It is sometimes termed fused silica, silica glass or fused quartz in the art. Vitreous silica is an amorphous form of quartz, and its various types can be formed in a variety of ways, as described below. Vitreous silica windows have been used in solar energy concentrators, since they are able to withstand high solar flux, high temperatures and high pressures. Generally, high purity vitreous silica is preferred for many applications. Many of the minor components of vitreous silica, e.g. Al, Na, OH and Cl, present from the manufacture of the vitreous silica are often regarded as impurities.

Various types of silica are used in different fields. Table I below shows various types of vitreous silica, their methods of production and typical OH content.

Table 1

| Type | Method of Manufacture | Typical OH Content (ppm) |
|---|---|---|
| I | Electric melting of quartz crystals in crucibles under vacuum. | $\leq 5$ |
| II | $H_2/O_2$ flame fusion of quartz crystals. | 150-300 |
| III | Hydrolysis of $SiCl_4/O_2$ flame, deposition and direct consolidation in the same step. | 1000 |
| IIIa | Hydrolysis of $SiCl_4$ (or other silanes) in $H_2/O_2$ flame, deposition of soot particles to form a porous intermediate body, consolidation to full density in a separate step; no dehydration. | 200 |
| IIIb | As IIIa with dehydration of intermediate soot body by Cl treatment. | <0.1 |
| IV | Oxidation of $SiCl_4$ in water-vapor-free plasma flame. | <5 |
| Va | Electric melting of very pure pegmatitic quartz in Mo or W crucibles in $H_2$-containing atmosphere as melted. | 100 |
| Vb | As Va but out-gassed above 1000°C in vacuum or air. | <1-100 |
| VI | Sintering of colloidal $SiO_2$ glass powder preforms after chloride reaction purification. | «1 |
| VII | Sol-gel route of Si-alkoxide, drying and sintering. | <1 - 100+ |

Much of the above information in Table I was drawn from Encyclopedia of Applied Physics, vol. 18, in a section entitled Silicon Dioxide, which was authored by R. Brückner (see pages 101 to 131). The Encyclopedia was published in 1997 by VCH Publishers, Inc. Values for the OH content are only guidelines and the various types of vitreous silica may comprise more or less than indicated above, depending on their conditions of manufacture. Further information on types of vitreous silica and their production can be found in this article and other prior art.

In the present invention, the vitreous silica is preferably selected from type II, III, IIIa, Va, Vb and VII vitreous silica. Vitreous silica for use in the present invention is available commercially. For example, Type V vitreous silica having an OH content of about 150 ppm is available from Philips. Types II and II vitreous silica can be obtained commercially, for example, from companies such as Heraeus Quarzglas.

Some methods of forming vitreous silica in the prior art are not generally suited to the efficient production of shaped windows where one or both of the major faces of the window is not flat, for example wherein at least one face is concave or convex. Methods of forming shaped vitreous silica windows that involve shaping of already-formed vitreous silica by physical methods, such as cutting, opening, bending, grinding or joining of vitreous silica tubes, are relatively expensive. It would be advantageous to provide a method of forming vitreous silica, such that the vitreous silica formed is in a desired shape, for example suitable for use as a window in a solar energy concentrator, for example a window having at least one concave or convex face. In the present invention, the vitreous silica is preferably formed using a sol-gel process, with subsequent densification, as this allows formation of the window in a desired shape.

If the vitreous silica is of type VII, it has preferably been manufactured using a sol-gel process, with subsequent densification, the vitreous silica having an OH content of 30 ppm or more. Suitable sol-gel and densification processes are known to the skilled person. A general sol-gel and densification process is described in EP 0705797 A2, which is incorporated herein by reference. EP 0705797 A2 describes a sol-gel and densification process, which produces a vitreous silica object by:

the cold filling of a suitable mould with a liquid colloidal dispersion, termed a sol, formed from suitable chemical precursors;
the polycondensation of the sol to obtain a gel therefrom (gelation);
the supercritical drying of the gel until an aerogel is obtained with dimensions corresponding to the mould used;
the densifying the aerogel by isotropic reduction (miniaturization).

The sol-gel and densification process may be as described in WO 02/04370. The sol-gel process in this application is preferred, since it has been found to produce vitreous silica having a high OH content and can be used to form objects of a desired shape and of relatively large size in an efficient manner. The sol-gel process involves:

- preparing a composition A comprising pyrogenic silica and an aqueous solution of an acid, such that the molar ratio $H_2O/SiO_2$ in composition A is equal or lower than 20 and its pH is equal or lower than 1.5;
- preparing a composition B comprising silica and an aqueous solution of a base not containing metallic cations, such that the molar ratio $H_2O/SiO_2$ in composition B is comprised between 6 and 40 and its pH is comprised between 10.5 and 13;
- forming a composition C by mixing composition A and composition B in such a ratio that the molar ratio between silica from composition A and silica from composition B is comprised between about 1: 2 and 3: 1, the pH of composition C is comprised between 1 and 5 and the molar ratio $H_2O/SiO_2$ is comprised between about 5 and 15 ;
- allowing gelation of composition C;
- substituting water present in the gel pores and in the vessel where the gel is contained with an non-protic liquid miscible with water;
- drying the gel by evaporation or supercritical extraction of the non-protic liquid.

The dried silica gel obtained from the sol-gel process is then densified according to known techniques, for example by using a thermal treatment. Further details of such treatments can be found in WO 02/04370 and other prior art.

The various aspects of the sol-gel process may be as disclosed in WO 02/04370. A vitreous silica object in an appropriate shape for use as a window for a solar receiver may be made in accordance with the sol-gel method described in Example 1 and the densification method in Example 2 of WO 02/04370.

In the above sol-gel process, the gelation preferably is carried out in a mould that corresponds to the desired shape of the lens. A reduction in dimensions will usually occur on densification, which the skilled person will appreciate, and therefore the size of the mould in which the gelation occurs will be of appropriate dimensions to allow for a decrease in size of the vitreous silica during densification. This can be determined by routine experimentation of the skilled person.

Accordingly, the present invention provides a method of producing of window for a solar receiver, the method comprising forming a vitreous silica object in a shape suitable for use as a window using a sol-gel process, with subsequent densification, the vitreous silica having an OH content of 30 ppm or more by weight. This method is advantageous in that it can produce high OH content vitreous silica, typically of type VII, on a suitable scale for the manufacture of windows for solar energy concentrators. This method can also be used to make a variety of shaped windows.

The window for use in the present invention may be of any shape or dimensions suitable for use in a solar receiver of a solar energy concentrator. The window may have two major faces, one of which, in use, will be disposed on the exterior of the housing of the solar receiver and the other of which will be disposed on the interior of the housing. The window may, for example, be of a generally cylindrical shape having two end faces, one or both of which may be flat or curved as desired. The window may have a generally frustroconical shape. At least one face or side of the window may be concave or convex. The window may be in the form of a lens. The dimensions of the window are not restricted and may be of any suitable size. The window may have maximum measurement across a major face of from 5 cm to 50 cm, preferably from 20 cm to 40 cm. If the window is circular in shape, which may be a flat circular shape or a domed shaped, for example, the diameter of the window may be from 5 cm to 50 cm, preferably from 20 cm to 40 cm. If in the shape of a dome, the window may have a height, measured from the base of the dome shape to the top of the dome along the axis of the dome of from 5 cm to 50 cm, preferably from 20 cm to 40 cm.

The housing of the solar receiver may be of any type for use in a solar energy concentrator. Preferably, the housing is suitable for heating a substance therein to a temperature of 800 °C or more, more preferably to a temperature of 1000 °C or more. Such housings are known in the prior art. The housing of the solar receiver may define a cavity or chamber and the housing may be arranged such that light can pass through the window into the cavity. The cavity may be suitable for acceptance of a fluid medium, such as a gas or liquid. The housing may be provided with one or more apertures in a wall of the housing, and such one or more apertures may serve as an inlet and/or outlet. The housing may comprise at least two apertures, and optionally conduits attached thereto, with one of the apertures, in use, acting as an inlet, another of the apertures acting, in use, as an outlet. In use, a fluid medium may be passed through the cavity of the housing.

The housing may define a cavity or chamber that can be pressurized, for example a cavity or chamber that can be pressurized, for example to a pressure of at least about 2 atm, optionally at least about 3 atm, optionally at least 5 atm.

The housing and its various components may comprise any suitable material or materials, depending on the desired use of the solar receiver, as the skilled person would appreciate.

The solar energy concentrator comprises (i) the solar receiver of the first aspect and (ii) a light concentrating device disposed externally of the housing, wherein the light concentrating device is positioned such that it concentrates light onto the window. The solar energy concentrator may be of any type disclosed in the prior art for use in heating a substance. The housing of the solar receiver and the light concentrating device may be of a type used in the prior art, preferably of a type capable of heating a substance to a temperature of 800 °C or more, more preferably 1000 °C or more. The light concentrating device may comprise one or more mirrors for concentrating incident light, e.g. sunlight, onto the window of the solar receiver, and/or one or more heliostats for reflection and concentration of incident sunlight. The light concentrating device may have a generally conical shaped mirror, having a wide end for acceptance of sunlight or concentrated sunlight and a narrow end for placement adjacent the window of the solar receiver. Preferably, the light concentrating device comprises an axially symmetric parabolic mirror, having an aperture at the narrow end thereof and is arranged in the solar concentrator such that the aperture is adjacent the window, to allow concentrated light to pass from the parabolic mirror to the window, and into the housing of the solar receiver. The solar concentrating device may be such that it has a concentration ratio of 1000 or more, preferably 5000 or more. Suitable solar concentrating devices are known in the prior art, and are for example described in an article by Kodama et al in Progress in Energy and Combustion Science 29 (2003) 567-597.

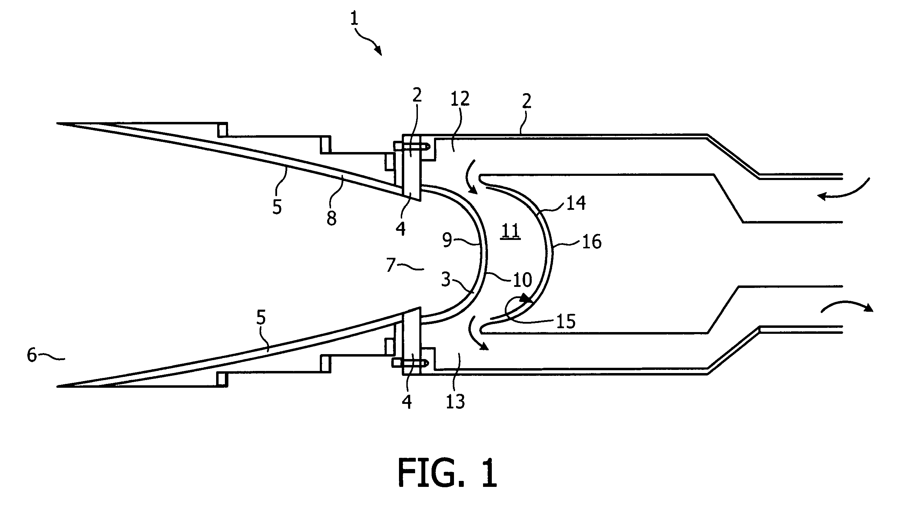

An embodiment of the present invention will now described with reference to Fig. 1.

Fig. 1 shows a cross sectional view of part of an embodiment of a solar energy concentrator 1. The solar energy concentrator comprises a housing 2 and a window 3 located on a wall 4 of the housing 2. An axially symmetric parabolic mirror 5 (partially shown), located on the exterior of the housing 2 has two openings: one at the wide end 6 and a central opening 7 at its narrow end 8. The central opening 7 is located adjacent the window 3. The parabolic mirror may form part of a larger light concentrating device, which may comprise, for example, one or more further mirrors for concentrating light, and/or one or more heliostats.

The window 3 has a dome shape, having a concave exterior surface 9 and a convex inner surface 10.

The housing 2 defines a cavity 11 having an inlet 12 and an outlet 13 for admission and expulsion of a fluid medium into the cavity.

A substrate 14 is located on one or more of the interior sides 15 of the walls 16 of the housing. The substrate 14 is of a dark color tone, for example black, to aid absorption of the concentrated light and heating of a fluid medium within the cavity. Suitable substrates are known to the skilled person.

The solar energy concentrator 1 may be used as follows. The solar concentrator is placed in a position to receive sunlight. A fluid medium is passed through inlet 12 into the cavity 11. When sunlight is incident upon the light concentrating device, it is directed to the parabolic mirror 5, which further concentrates the light as it passes to window 3. The concentrated light passes through the window 3 and through the fluid medium until it is incident upon the substrate 14. The passage of light through the fluid medium and radiating from the heated substrate 14 heats the fluid medium.

One or more embodiments of the solar concentrator and/or solar receiver may be used to heat a fluid material, which may be a gas or a liquid, optionally to temperatures of 800 °C or above. The gas may comprise air. In an embodiment, a conduit may be disposed within the housing, and the conduit may be heated by the incident concentrated solar radiation passing into the housing through the window. In use, a fluid medium, such as a gas or liquid, may be passed through the conduit in the housing, such that the conduit heats the fluid medium; the fluid medium can be passed out of the housing in the conduit, for use as desired. Conduits for use in the present invention are known to the skilled person and may comprise a pipe, for example, optionally having an outer surface which may have a dark color, e.g. black color, for efficient absorption of light radiation and heating of the conduit.

One or more embodiments of solar receiver and/or energy concentrator may be used (i) to heat a gas, such as air, to temperatures of 800 °C or more, which can then be used in further energy conversion processes, or (ii) to carry out a variety of high-temperature chemical reactions, for example reactions that are carried out at 800 °C or above. Such reactions may include, but are not limited to, (i) the splitting of water ($H_2O \rightarrow H_2 + 1/2O_2$), optionally with one or more suitable catalysts; (ii) gasification of coal with steam and/or $CO_2$ to produce syn-gas (CO and $H_2$), optionally with subsequent separation of the hydrogen from the syngas; (iii) syn-gas (CO and $H_2$) production from methane and carbon dioxide, optionally with subsequent separation of the hydrogen from the syngas; (iv) dehydrogenative coupling of methane ($2CH_4 \rightarrow C_2H_{8-2n} + nH_2$). These reactions are described in more detail in the prior art, for example in an article by Kodama in Progress in Energy and Combustion Science 29 (2003) 567-597. Further reactions that may be carried out in the solar receiver of the present invention include, but are not limited to, carbothermal reduction of $Al_2O_3$ + C to Al; carbothermal reduction of CaC + C to $CaC_2$; carbothermal reduction of $SiO_2$ + C to Si; pyrolysis of coal; pyrolysis of biomass; heavy oil cracking; thermal dissociation of $CaSO_4 \cdot nH_2O$; thermal dissociation of $CaCO_3$; and thermal dissociation of $Ca(OH)_2$.

Certain aspects of the present invention will now be illustrated in the following non-limiting Examples.

EXAMPLES

The following Examples illustrate the absorption properties of vitreous silica having a high OH content.

*Example 1*

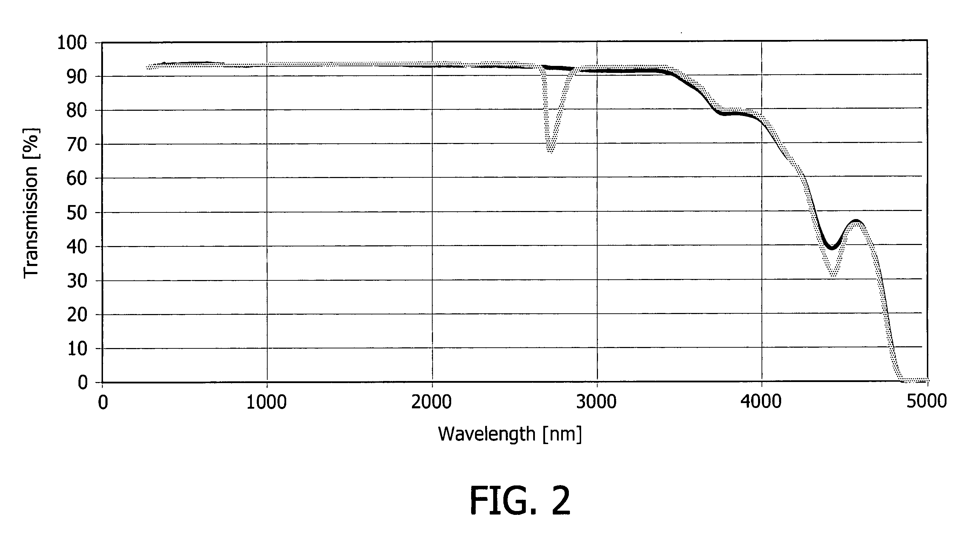

Two 1mm thick quartz samples having a known OH-content of 0.2 and 141 ppm respectively were obtained (the former was Philips quartz product PH300 XD and the latter was Philips quartz product PH409 unbaked, both of which were Type V vitreous silica). The transmittance of light (measured as % of light transmitted) through each sample was measured across a range of infrared wavelengths with a Fourier Transform Infrared Spectrometer. The results are shown in Fig. 2. It can be seen that the OH groups in the quartz absorb in the 2680 - 2800 nm region and have a maximum absorption value at 2720 nm.

*Example 2*

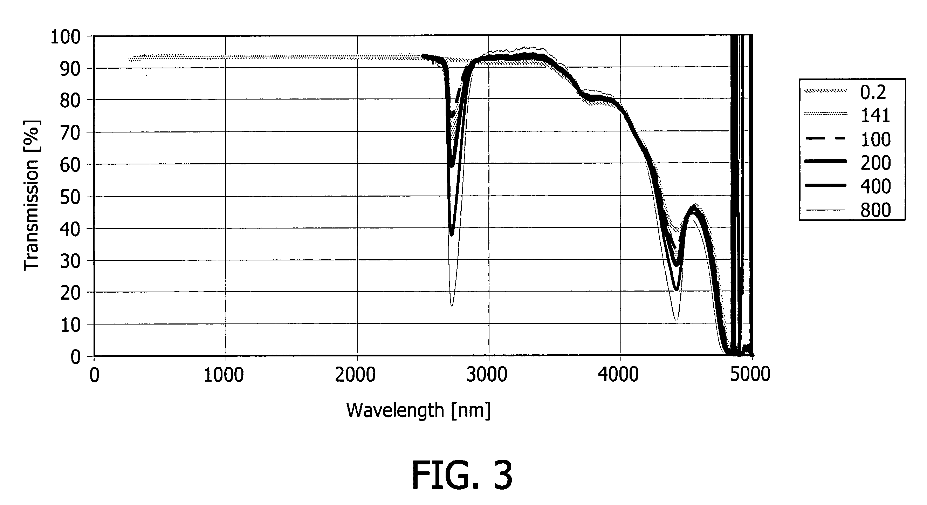

Further values for the transmittance of light of quartz samples having OH contents of 100, 200, 400 and 800 ppm were calculated. Fig. 3 shows calculated transmission spectra of quartz with 100, 200, 400 and 800 ppm OH groups.
The transmission spectra of Fig. 3 were calculated with equations (1) and (2):

$$T = (100 - R)*e^{-A} \tag{1}$$

with

R = reflectance losses (3.5% at each of the two quartz-air interfaces)
A = absorbance that is calculated with the Lambert-Beer law (2):

$$A = \alpha*n*l \tag{2}$$

with

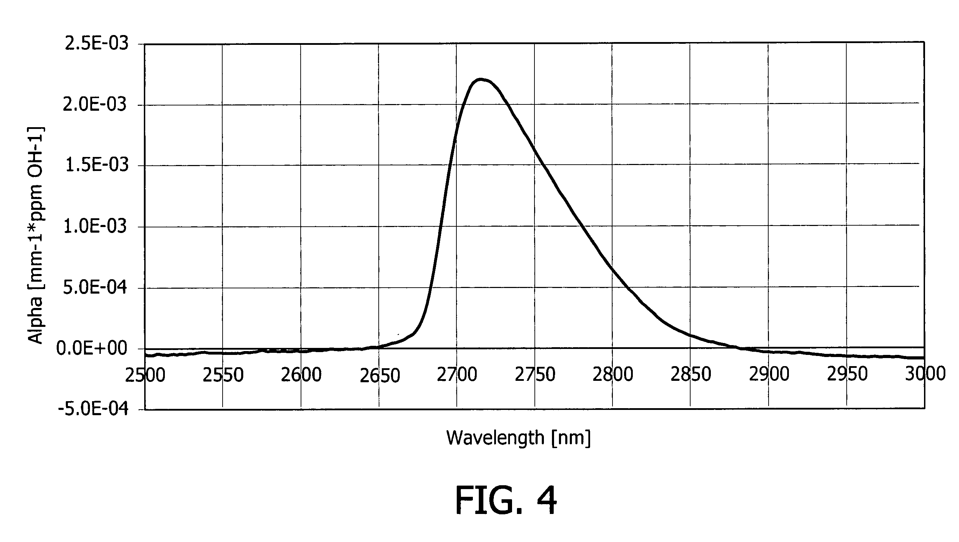

$\alpha$ = absorptivity of OH-groups ($mm^{-1}ppmOH^{-1}$), calculated from the experimental results in Example 1, and shown in Fig. 4
n = concentration of OH-groups (ppm by weight)
l = quartz thickness (mm)

A black body at 800 °C will emit light across the whole of the infrared spectrum and approximately 3 % of emitted light will be in the 2680 to 2800 nm region. Vitreous silica is not a black body, but when vitreous silica having a high OH content displays a significant absorption in the 2680-2800 nm range, this material, when heated to 800 °C will emit a significant amount of infrared radiation in this range (Kirchoff's law). Sunlight typically has very low intensity in the infrared region of 2680-2800 nm. Consequently, the present inventors have found that, in the context of the present invention, when vitreous silica having a high OH content is at a temperature of 800 °C or more (due to passage of highly concentrated solar radiation through the vitreous silica), it will emit more infrared radiation in the 2680 - 2800 nm region than low OH content vitreous silica, while not increasing its absorbance of the incident sunlight to any great extent. For a given intensity of light incident on the window, a high OH content window will emit more infrared energy than a low OH content window, hence the use of high OH content vitreous silica enables one to increase the temperature in the interior of the housing of a solar receiver, while maintaining the temperature of the vitreous silica window at a suitable lower temperature, i.e. lower than a vitreous silica window having a low OH content.
While the invention has been illustrated and described in detail in the drawings and foregoing description, such illustration and description are to be considered illustrative or exemplary and not restrictive; the invention is not limited to the disclosed embodiments.
Variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

**Claims**

1. A solar receiver for use in a solar energy concentrator, the receiver comprising a housing (2) and a window (3) disposed in or on a wall (4) of the housing (2), wherein the window (3) comprises vitreous silica having an OH content of 30 ppm or more by weight.

2. A solar receiver according to claim 1, wherein the window (3) comprises vitreous silica having an OH content of 100 ppm or more by weight.

3. A solar receiver according to claim 2, wherein the window (3) comprises vitreous silica having an OH content of 300 ppm or more by weight.

4. A solar receiver according to claim 3, wherein the window (3) comprises vitreous silica having an OH content of 600 ppm or more by weight.

5. A solar receiver according to any one of the preceding claims, wherein the vitreous silica is selected from type II, III, IIIa, Va, Vb and VII vitreous silica.

6. A solar receiver according to any one of claim 1 to 4, wherein the vitreous silica has been formed in a sol-gel process, with subsequent densification, the vitreous silica having an OH content of 30 ppm or more.

7. A solar receiver according to any one of the preceding claims, wherein the window (3) has at least one concave or convex face (9, 10).

8. A solar receiver according to any one of the preceding claims, wherein the housing (2) defines a cavity (11) and light can pass through the window (3) into the cavity (11).

9. A solar energy concentrator (1) comprising (i) a solar receiver as defined in any one of claims 1 to 8 and (ii) a light concentrating device (5) disposed externally of the housing, wherein the light concentrating device (5) is positioned such that it concentrates light onto the window (3) of the solar receiver.

10. A method of heating a substance, the method comprising

    (i) providing a solar energy concentrator (1) as defined claim 9, wherein the substance is disposed on a side of the window (3) in the interior of the housing (2); and
    (ii) allowing light to be incident on the light concentrating device, such that the light is concentrated and passes through the window (3) to the substance to heat the substance.

11. A method of heating a substance according to claim 10, wherein the substance comprises a fluid material, the solar receiver in the solar energy concentrator (1) is as defined in claim 8, and the substance is located within the cavity (11).

12. Use of vitreous silica having an OH content of 30 ppm or more by weight in a window (3) in a solar energy concentrator (1).

13. The use according to claim 12, where a substance in the solar energy concentrator is heated to a temperature of 800 °C or more.

**Patentansprüche**

1. Solarempfänger zur Verwendung in einem Solarenergiekonzentrator, wobei der Empfänger ein Gehäuse (2) und ein in oder auf einer Wand (4) des Gehäuses (2) angeordnetes Fenster (3) umfasst, wobei das Fenster (3) Quarzglas mit einem OH-Gehalt von 30 Gew.-ppm oder mehr enthält.

2. Solarempfänger nach Anspruch 1, wobei das Fenster (3) Quarzglas mit einem OH-Gehalt von 100 Gew.-ppm oder mehr enthält.

3. Solarempfänger nach Anspruch 2, wobei das Fenster (3) Quarzglas mit einem OH-Gehalt von 300 Gew.-ppm oder mehr enthält.

4. Solarempfänger nach Anspruch 3, wobei das Fenster (3) Quarzglas mit einem OH-Gehalt von 600 Gew.-ppm oder mehr enthält.

5. Solarempfänger nach einem der vorangegangenen Ansprüche, wobei das Quarzglas ausgewählt wird aus Quarzglas Typ II, III, IIIa, Va, Vb sowie VII.

6. Solarempfänger nach einem der Ansprüche 1 bis 4, wobei das Quarzglas in einem Sol-Gel-Prozess mit anschließendem Verdichten hergestellt wurde, wobei das Quarzglas einen OH-Gehalt von 30 Gew.-ppm oder mehr aufweist.

7. Solarempfänger nach einem der vorangegangenen Ansprüche, wobei das Fenster (3) mindestens eine konkave oder konvexe Seite (9, 10) aufweist.

8. Solarempfänger nach einem der vorangegangenen Ansprüche, wobei das Gehäuse (2) einen Hohlraum (11) definiert und Licht durch das Fenster (3) in den Hohlraum (11) eintreten kann.

9. Solarenergiekonzentrator (1), der (i) einen Solarempfänger, wie in einem der Ansprüche 1 bis 8 definiert, sowie (ii) eine außerhalb des Gehäuses angeordnete Vorrichtung (5) zur Konzentration von Licht umfasst, wobei die Vorrichtung (5) zur Konzentration von Licht so positioniert ist, dass sie Licht auf das Fenster (3) des Solarempfängers konzentriert.

10. Verfahren zur Erhitzung einer Substanz, wobei gemäß dem Verfahren

(i) ein Solarenergiekonzentrator (1), wie in Anspruch 9 definiert, vorgesehen wird, wobei die Substanz auf einer Seite des Fensters (3) im Inneren des Gehäuses (2) angeordnet ist; und
(ii) Licht auf die Vorrichtung zur Konzentration so auffallen kann, dass das Licht konzentriert wird und durch das Fenster (3) zu der Substanz gelangt, um die Substanz zu erhitzen.

11. Verfahren zur Erhitzung einer Substanz nach Anspruch 10, wobei die Substanz ein Flüssigmaterial enthält, der Solarempfänger in dem Solarenergiekonzentrator (1) ein solcher wie in Anspruch 8 definiert ist, und die Substanz sich innerhalb des Hohlraums (11) befindet.

12. Verwendung von Quarzglas mit einem OH-Gehalt von 30 Gew.-ppm oder mehr in einem Fenster (3) in einem Solarenergiekonzentrator (1).

13. Verwendung nach Anspruch 12, wobei eine Substanz in dem Solarenergiekonzentrator auf eine Temperatur von 800°C oder mehr erhitzt wird.

## Revendications

1. Récepteur solaire destiné à être utilisé dans un concentrateur d'énergie solaire, le récepteur comprenant : un logement (2) et une fenêtre (3) disposée dans ou sur une paroi (4) du logement (2), dans lequel la fenêtre (3) comprend de la silice vitreuse possédant une teneur en OH de 30 ppm ou plus en poids.

2. Récepteur solaire selon la revendication 1, dans lequel la fenêtre (3) comprend de la silice vitreuse possédant une teneur en OH de 100 ppm ou plus en poids.

3. Récepteur solaire selon la revendication 2, dans lequel la fenêtre (3) comprend de la silice vitreuse possédant une teneur en OH de 300 ppm ou plus en poids.

4. Récepteur solaire selon la revendication 3, dans lequel la fenêtre (3) comprend de la silice vitreuse possédant une teneur en OH de 600 ppm ou plus en poids.

5. Récepteur solaire selon une quelconque des revendications précédentes, dans lequel la silice vitreuse est sélectionnée parmi de la silice vitreuse de type II, III, IIIa, Va, Vb et VII.

**6.** Récepteur solaire selon une quelconque des revendications 1 à 4, dans lequel la silice vitreuse a été formée dans un procédé sol-gel, avec une densification subséquente, la silice vitreuse possédant une teneur en OH de 30 ppm ou plus.

**7.** Récepteur solaire selon une quelconque des revendications précédentes, dans lequel la fenêtre (3) comporte au moins une face concave ou convexe (9, 10).

**8.** Récepteur solaire selon une quelconque des revendications précédentes, dans lequel le logement (2) définit une cavité (11) et de la lumière peut passer à travers la fenêtre (3) dans la cavité (11).

**9.** Concentrateur d'énergie solaire (1) comprenant (i) un récepteur solaire selon une quelconque des revendications 1 à 8 et (ii) un dispositif de concentration de lumière (5) disposé à l'extérieur du logement, dans lequel le dispositif de concentration de lumière (5) est positionné de sorte qu'il concentre de la lumière sur la fenêtre (3) du récepteur solaire.

**10.** Procédé de chauffage d'une substance, le procédé comprenant :

(i) la fourniture d'un concentrateur d'énergie solaire (1) selon la revendication 9, dans lequel la substance est disposée sur un côté de la fenêtre (3) à l'intérieur du logement (2) ; et
(ii) la permission de l'incidence de la lumière sur le dispositif de concentration de lumière, de sorte que la lumière soit concentrée et passe à travers la fenêtre (3) jusqu'à la substance pour chauffer la substance.

**11.** Procédé de chauffage d'une substance selon la revendication 10, dans lequel la substance comprend un matériau fluide, le récepteur solaire dans le concentrateur d'énergie solaire (1) est selon la revendication 8, et la substance est positionnée à l'intérieur de la cavité (11).

**12.** Utilisation de silice vitreuse possédant une teneur en OH de 30 ppm ou plus en poids dans une fenêtre (3) dans un concentrateur d'énergie solaire (1).

**13.** Utilisation selon la revendication 12, où une substance dans le concentrateur d'énergie solaire est chauffée jusqu'à une température de 800°C ou plus.

FIG. 1

FIG. 2

FIG. 3

## FIG. 4

EP 2 347 192 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1610073 A
- EP 0705797 A2

- WO 0204370 A

**Non-patent literature cited in the description**

- **RÖGER et al.** *Journal of Solar Energy Engineering,* 2006, vol. 128, 265-274
- **RÖGER.** *the Journal of Solar Energy Engineering,* 2006, vol. 128, 265-274
- **SHELBY.** *Journal of Applied Physics,* May 1980, vol. 51 (5

- **R. BRÜCKNER.** Encyclopedia of Applied Physics. vol. 18, 101-131
- The Encyclopedia. VCH Publishers, Inc, 1997
- **KODAMA et al.** *Progress in Energy and Combustion Science,* 2003, vol. 29, 567-597
- **KODAMA.** *Progress in Energy and Combustion Science,* 2003, vol. 29, 567-597